# DEMANDE DE BREVET EUROPEEN

(11) **EP 1 582 408 A1**
(43) Date de publication de la demande: **05.10.2005**
(21) Numéro de dépôt: 05300237.4
(22) Date de dépôt: 31.03.2005
(51) Int. Cl.: B60R 9/058, B60R 9/045

(54) **Agencement d'un dispositif de compensation de jeu**

(30) Priorité: 31.03.2004 FR 0450626
(71) Demandeur: Renault s.a.s., 92100 Boulogne Billancourt (FR)
(72) Inventeur: Premartin, Arnaud, 92190, MEUDON LA FORET (FR); Rouyer, François, 75013, PARIS (FR)

(57) **Abrégé**

Agencement d'un dispositif de compensation de jeu, comportant un élément guidant (18) solidaire d'un support (14) monté à translation à l'intérieur d'un rail longitudinal (20) solidaire du pavillon, et un moyen de verrouillage (30) du support (14) sur le rail (20), caractérisé en ce qu'il est prévu, dans un logement (28) ménagé à l'intérieur de l'élément guidant (18), une agrafe élastique (32) apte à limiter, lorsque le support (14) est en position verrouillée, une translation du support (14) selon une direction verticale et une rotation du support (14) autour d'un axe transversal.

## Description

L'invention concerne un agencement d'un dispositif de compensation de jeu, comportant un élément guidant solidaire d'un support et monté à translation à l'intérieur d'un rail longitudinal, et un moyen de verrouillage du support sur le rail,

On connaît par la publication FR-A-2707938 un agencement de barres de toit dans lequel un support de barre est monté à translation à l'intérieur d'un rail. Un moyen de verrouillage permet de bloquer la barre dans une position déterminée. Cependant, même en position verrouillée, un jeu résiduel demeure entre le support de barre et le rail, ce qui peut générer des déplacements parasites du support de barre et engendrer par exemple des risques de bruits ou d'usure de pièces, par exemple.

On connaît par la publication US-A-5183234 un agencement de glissière de siège dans lequel un support de siège est monté à translation à l'intérieur d'un rail. Un moyen de verrouillage utilisant des billes permet de bloquer le siège dans une position déterminée. Pour éviter tout bruit entre le support de siège et le rail, un amortisseur en matériau souple tel qu'une résine synthétique est inséré entre le support et le rail. Cet amortisseur est un profilé en forme de U.

Cet agencement présente cependant des inconvénients. La matière utilisée risque de ne pas résister aux conditions extérieures auxquelles sont soumises des barres de toit. En effet, il peut y avoir des variations dimensionnelles de l'absorbeur en fonction de la température. De plus, on peut également rencontrer des problèmes liés au fluage et à la résilience du matériau utilisé. En outre, la taille importante et la forme de l'amortisseur risquent de ne pas être bien adaptées à un nouvel environnement tel que celui des barres de toit.

En outre, l'utilisation de matières plastiques déformables n'est pas toujours esthétique et ne donne pas toujours une bonne qualité perçue lors du démontage des barres.

Enfin, un profilé de ce type, en raison de sa forme, peut aussi entraîner des coûts supplémentaires dans la fabrication et dans le montage de la pièce.

Afin de pallier ces inconvénients, l'invention a pour objet un agencement d'un dispositif de compensation de jeu dans lequel, lorsque le support de barre est en position verrouillée, les jeux sont réduits et les risques de déplacement du support sont limités.

L'invention a aussi pour objet un agencement de dispositif de compensation de jeu résistant aux conditions extérieures.

L'invention a enfin pour objet un agencement de dispositif de compensation de jeu dans lequel le montage est facilité et moins onéreux.

A cet effet, l'invention propose un agencement d'un dispositif de compensation de jeu du type cité ci-dessus, caractérisé en ce qu'il est prévu, dans un logement ménagé à l'intérieur de l'élément guidant, une agrafe élastique apte à limiter, lorsque le support est en position verrouillée, une translation du support selon une direction verticale et une rotation du support autour d'un axe transversal.

Selon d'autres caractéristiques de l'invention:
- Des bords transversaux de l'agrafe comportent chacun deux pattes s'étendant dans une direction globalement longitudinale et aptes à coopérer avec des parois latérales de l'élément guidant.
- Des bords transversaux de l'agrafe comportent chacun au moins une griffe coopérant avec un moyen d'encliquetage porté par une paroi du logement.
- L'agrafe comporte un trou apte à coopérer avec un axe de fixation vertical.
- Le profil de l'agrafe est incurvé de façon qu'elle présente deux appuis transversaux inférieurs aptes à coopérer avec le rail.
- L'agrafe est métallique.

D'autres caractéristiques et avantages de l'invention apparaîtront à la lecture de la description d'exemples de réalisation d'un agencement de dispositif de compensation de jeu en référence aux dessins annexés dans lesquels :
- La figure 1 est une vue en perspective d'un porte-charge comportant un agencement de dispositif de compensation de jeu selon l'invention.
- La figure 2 est une vue de dessous en perspective d'un détail du porte-charge de la figure 1.
- La figure 3 est une vue schématique latérale du porte-charge de la figure 1.

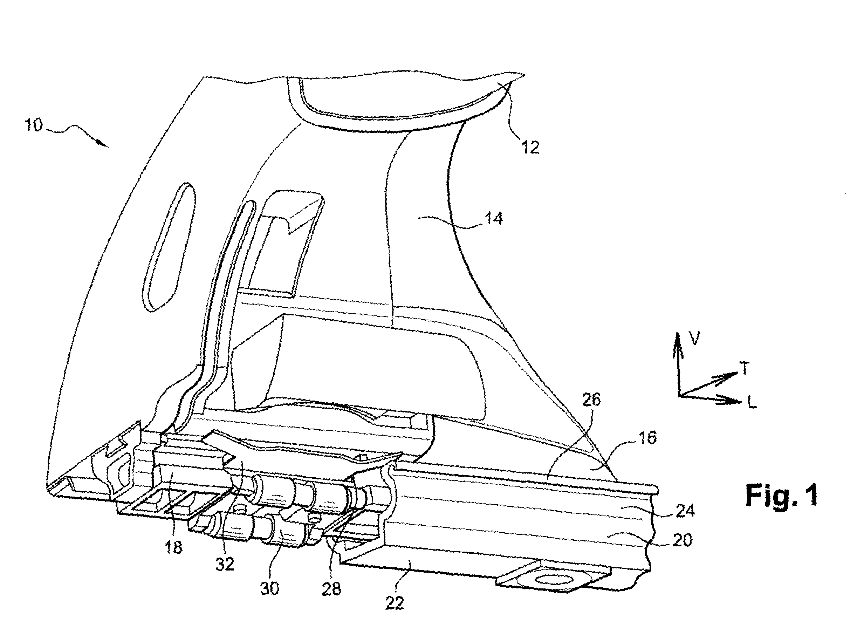

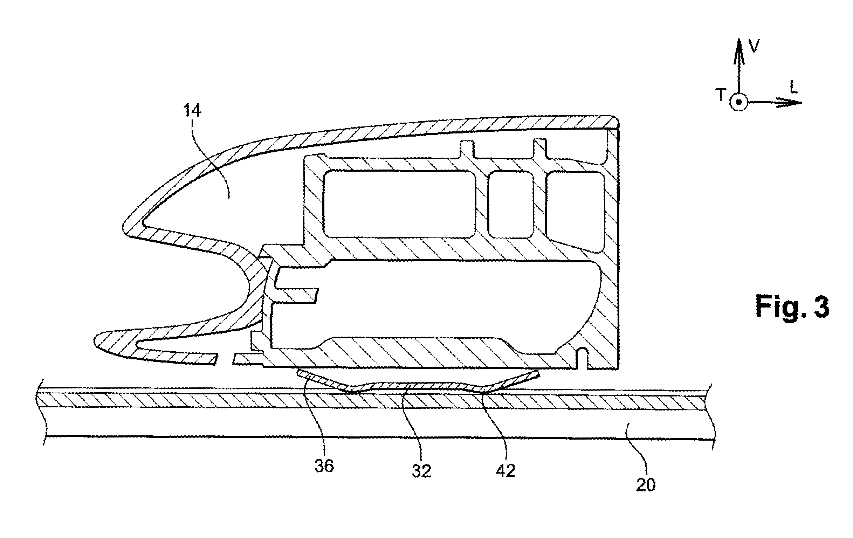

Dans la description qui suit, nous prendrons à titre non limitatif une orientation longitudinale, verticale et transversale indiquée par le trièdre L,V,T des figures 1, 2 et 3.

Des éléments identiques ou analogues sont désignés par les mêmes chiffres de référence.

Tel que représenté à la figure 1, un porte-charge 10 comporte au moins une barre transversale 12 munie de deux supports 14 (seul l'un des supports est représenté sur la figure).

La partie inférieure 16 du support 14 comporte un élément guidant longitudinal 18 apte coulisser à l'intérieur d'un rail longitudinal 20, solidaire d'un pavillon de véhicule automobile (non représenté).

Le rail 20 comporte une paroi de fond 22 et des parois latérales 24 de façon à présenter un profil en forme de U ouvert vers le haut. La partie supérieure des parois latérales 24 se prolonge vers l'extérieur du "U" par un rebord 26.

L'élément guidant 18 comporte des parois latérales 28a. Un logement 28, ménagé dans l'élément guidant 18, présente deux parois 28b en regard l'une de l'autre.

Dans l'exemple décrit ici, un moyen de verrouillage 30 à rouleaux, connu de l'état de la technique, donc non décrit en détail, est agencé en regard du logement 28. Le moyen de verrouillage 30 permet de bloquer le support 14 de barre dans une position déterminée. Lorsque le support est en position verrouillée, il subsiste un jeu entre le support 14 de barre et le rail 20.

Bien entendu, le moyen de verrouillage à rouleaux n'est décrit qu'à titre illustratif. L'invention peut s'appliquer à tout porte-charge comportant un moyen de verrouillage laissant subsister un jeu entre le rail et le support en position verrouillée.

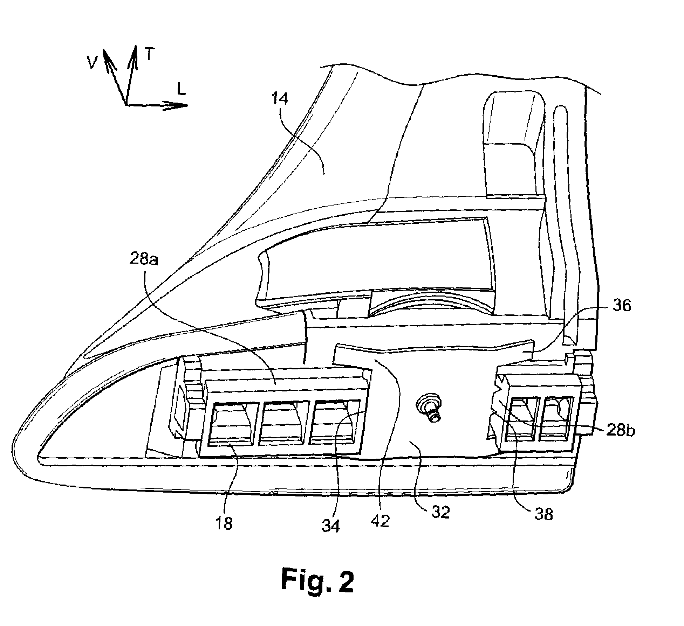

Tel que décrit à la figure 2, une agrafe 32, en matériau métallique élastique, présente une forme générale pouvant sensiblement s'inscrire dans un rectangle.

L'agrafe comporte des bord transversaux 34 munis chacun de deux pattes 36 s'étendant dans un plan globalement longitudinal.

Les bords transversaux 34 sont également chacun munis d'au moins une griffe 38.

L'agrafe 32 est agencée à l'intérieur du logement 28 de façon que les pattes 36 coopèrent avec les parois latérales 28a de l'élément guidant 18.

Les griffes 38 coopèrent, par exemple, avec des moyens d'encliquetage (non représentés), portés par les parois 28b du logement 28.

Les pattes 36 et les griffes 38 permettent ainsi de maintenir l'agrafe 32 dans le logement 28.

On peut également prévoir un troisième moyen de maintien tel qu'un axe de fixation, porté par la face inférieure du support 14, apte à coopérer avec un trou ménagé dans la surface de l'agrafe 32.

L'agrafe 32 présente un profil incurvé de façon que les pattes 36 s'étendent vers le haut et de façon qu'elle comporte deux bossages transversaux 42 aptes à prendre appui sur les rebords 26 du rail 20.

Ainsi, lorsque le support 14 est verrouillé, l'agrafe élastique 32 permet de compenser le jeu résiduel entre le support et le rail et empêche ainsi un déplacement vertical du support 14. De plus, le fait que l'agrafe 32 comporte deux appuis bas 42 empêche le débattement angulaire du support 14 autour d'un axe transversal, phénomène souvent observé dans le cas où les barres sont chargées avec des skis.

Le fait que les déplacements des supports de barres soient limités permet ainsi d'éviter une augmentation des jeux liée à l'usure provoquée par les débattements et les déplacements,

De plus, l'agrafe 32 recouverte de peinture ou de tout autre revêtement protecteur résiste très bien au vieillissement et aux intempéries.

Avantageusement, l'agrafe 32 étant bien maintenue, d'une part elle ne risque pas de tomber lors du montage des barres dans les rails, d'autre part elle ne risque pas non plus d'induire elle-même des bruits parasites en vibrant.

Cet agencement présente également l'avantage de proposer un montage facile.

Ainsi, lorsqu'un opérateur doit monter l'agrafe 32 sur le support 14, il fait coulisser l'agrafe 32 à l'intérieur du logement 28, en se guidant sur les parois 28b ou bien, s'il existe, sur l'axe de fixation, jusqu'à ce que les griffes 38 pénètrent automatiquement à l'intérieur des moyens d'encliquetage.

Une fois l'agrafe 32 mise en place, l'opérateur fait coulisser le moyen de guidage 18 à l'intérieur du rail 20.

Grâce à ce procédé de montage, l'agrafe 32 ne risque pas de tomber, juste avant l'opération de coulissement de l'élément guidant 18 à l'intérieur du rail 20.

De plus, d'un point de vue logistique, cet agencement permet également de procéder d'un côté au montage de l'agrafe 32 sur la barre 12 et de l'autre à la fabrication du rail 20. Ainsi il est possible de faire fabriquer les deux pièces séparément sur des sites différents et ensuite de les assembler sur un autre site. La livraison de la barre 12 est alors simple et aucun risque de perte de l'agrafe 32 n'est possible.

Bien évidemment, le mode de réalisation décrit n'a été donné qu'à titre d'exemple. L'invention peut également concerner tout dispositif comportant un élément coulissant dans un rail et dans lequel une compensation de jeu est nécessaire.

## Revendications

1. Agencement d'un dispositif de compensation de jeu, comportant un élément guidant (18) solidaire d'un support (14) monté à translation à l'intérieur d'un rail longitudinal (20), et un moyen de verrouillage (30) du support (14) sur le rail (20), **caractérisé en ce qu'**il est prévu, dans un logement (28) ménagé à l'intérieur de l'élément guidant (18), une agrafe élastique (32) apte à limiter, lorsque le support (14) est en position verrouillée, une translation du support (14) selon une direction verticale et une rotation du support (14) autour d'un axe transversal.

2. Agencement d'un dispositif de compensation de jeu selon la revendication précédente, **caractérisé en ce que** des bords transversaux (34) de l'agrafe (32) comportent chacun deux pattes (36) s'étendant dans une direction globalement longitudinale et aptes à coopérer avec des parois latérales (28a) de l'élément guidant (18).

3. Agencement d'un dispositif de compensation de jeu selon l'une quelconque des revendications précédentes, **caractérisé en ce que** des bords transversaux (34) de l'agrafe (32) comportent chacun au moins une griffe (38) coopérant avec un moyen d'encliquetage porté par une paroi (28b) du logement (28).

4. Agencement d'un dispositif de compensation de jeu selon l'une quelconque des revendications précédentes, **caractérisé en ce que** l'agrafe (32) comporte un trou apte à coopérer avec un axe de fixation vertical.

5. Agencement d'un dispositif de compensation de jeu selon l'une quelconque des revendications 2 à 4 précédentes, **caractérisé en ce que** le profil de l'agrafe (32) est incurvé de façon qu'elle présente deux appuis transversaux inférieurs (42) aptes à coopérer avec le rail (20).

6. Agencement d'un dispositif de compensation de jeu selon l'une quelconque des revendications précédentes, **caractérisé en ce que** l'agrafe (32) est métallique.
